# FASCICULE DE BREVET EUROPEEN

(11) **EP 1 164 346 B1**
(45) Date de publication et mention de la délivrance du brevet: **26.01.2005**
(21) Numéro de dépôt: 01401556.4
(22) Date de dépôt: 14.06.2001
(51) Int. Cl.: F28F 9/26, B23K 11/00, B23K 33/00, F28F 9/18

(54) **Manchon permettant de relier de facon étanche deux parois planes espacées parallèles en tôle de relativement faible épaisseur**
Dichtungshülse zum Erzielen einer dichten Verbindung zwischen zwei flachen paralellen Wänden aus dünnwandinem Blech
Sealing sleeve for making a leakproof connection between two planar parallel walls made of thin sheet material

(30) Priorité: 16.06.2000 FR 0007709
(43) Date de publication de la demande: 19.12.2001
(73) Titulaire: ZEHNDER GROUP SERVICES, 91004 Evry (FR)
(72) Inventeur: Mandel, Eric, 02100 Saint Quentin (FR)
(74) Mandataire: Thinat, Michel

(56) Documents cités:
- EP-A- 0 867 681
- DE-A- 2 317 828
- US-A- 4 448 245

## Description

La présente invention concerne un manchon permettant de relier de façon étanche deux parois planes espacées en tôle sensiblement parallèles et de relativement faible épaisseur, par soudage électrique par résistance.

Elle peut s'appliquer à l'accouplement étanche de deux réservoirs à parois planes de grandes dimensions et de faibles épaisseurs afin de permettre une circulation de fluide entre les deux réservoirs.

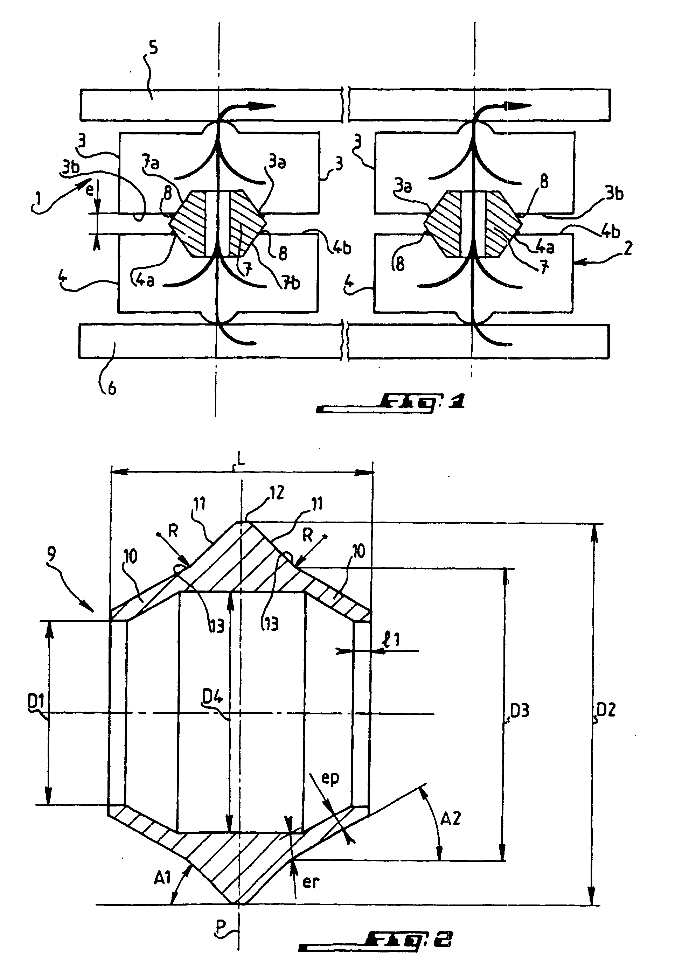

En particulier, elle s'applique à l'accouplement de deux panneaux d'un radiateur de chauffage à circulation d'eau comme représenté en figure 1.

Selon cette figure, le radiateur, qui est représenté en coupe transversale, comprend deux parties 1, 2 comportant chacune deux collecteurs 3 et 4 sur lesquels sont soudés les éléments chauffants 5, 6 du radiateur constitués chacun, par exemple, par des tubes aplatis rectangulaires. Comme cela est connu, les deux collecteurs 3, 4 situés d'un même côté du radiateur sont accouplés l'un à l'autre par au moins un manchon 7 assurant à travers celui-ci le passage d'eau chaude d'un collecteur à l'autre et donc d'un élément chauffant à l'autre du radiateur tout en procurant un écartement e entre les deux collecteurs 3, 4 pour des raisons esthétiques.

Chaque manchon de liaison 7 se présente sous la forme de deux portions tronconiques identiques 7a, 7b, dont les parties de plus petit diamètre sont opposées les unes aux autres, et traversant respectivement deux perçages 3a, 4a des deux parois planes en tôle 3b, 4b en regard l'une de l'autre des deux collecteurs 3, 4 qui présentent dans le cas présent une section transversale rectangulaire.

La fixation des deux collecteurs 3, 4 et leur étanchéité relative sont assurées par des cordons annulaires de soudure 8 de fixation des bords des perçages 3a, 4a des tôles 3b, 4b respectivement sur les parties tronconiques 7a, 7b du manchon 7 et qui sont réalisées simultanément par soudage électrique par résistance.

Dans ce genre de liaison connue, la difficulté réside dans la formation des soudures 8 de fixation des tôles relativement minces 3b, 4b, de l'ordre de 1 à 1,5 millimètres d'épaisseur, au manchon relativement massif 7 sans provoquer de déformation résiduelle de ces tôles après soudage tout en garantissant l'étanchéité, la tenue mécanique, l'écartement souhaité e avec une reproductibilité relativement fiable dans le temps de celui-ci une fois les paramètres de soudage figés pour accoupler d'autres collecteurs de radiateurs.

Avec les manchons de liaison conventionnels tels que représentés en figure 1, pour obtenir une bonne résistance mécanique de liaison et une étanchéité satisfaisante, des pressions de soudage très importantes ainsi que des intensités de courant élevées sont nécessaires. En outre, une préparation mécanique relativement longue, donc coûteuse, et complexe des trous ou perçages destinés à recevoir le manchon de liaison est indispensable.

Dans ces conditions, il est donc impossible de réaliser de façon fiable et répétitive un accouplement étanche, sans déformation, à écartement souhaité e constant, avec une tenue mécanique satisfaisante, les paramètres de soudage et les résultats obtenus étant antagonistes.

La présente invention a pour but d'éliminer les inconvénients ci-dessus des manchons de liaison connus en proposant un manchon agencé de façon à réduire considérablement non seulement les pressions de soudage habituellement mises en oeuvre, mais également les intensités de courant de soudage, sans préparation préalable des trous ou perçages de réception du manchon et qui sont réduits à leur plus simple expression géométrique. Le manchon de l'invention ne nécessite aucun outillage ou pièce intermédiaire de maintien de celui-ci tout en garantissant une faible déformation résiduelle et un écartement entre parois planes constant.

A cet effet, selon l'invention, le manchon permettant de relier de façon étanche deux parois planes espacées en tôle sensiblement parallèles de relativement faible épaisseur en soudant, par soudage électrique par résistance, les bords de deux perçages des deux parois aux pourtours correspondants du manchon qui s'étend transversalement aux deux parois, est caractérisé en ce qu'il comprend, à partir d'au moins l'une des extrémités du manchon, deux parties tronconiques successives, la première partie tronconique partant de l'extrémité du manchon ayant une pente inférieure à celle de la deuxième partie tronconique suivante et permettant à la fois de positionner le manchon dans le perçage correspondant de la paroi et, lorsqu'est exercée la pression de soudage entre le manchon et la paroi et est appliqué le courant de soudage, de prédéformer le bord du perçage pour l'amener en contact intime sur la première partie tronconique pour le déformer ensuite en contact intime avec la deuxième partie tronconique et souder le bord déformé sur la deuxième partie tronconique.

De préférence, le manchon comprend également, à partir de l'autre extrémité opposée de celui-ci, deux parties tronconiques successives, la troisième partie tronconique partant de l'extrémité opposée du manchon ayant une pente inférieure à celle de la quatrième partie tronconique suivante et permettant à la fois de positionner le manchon dans le perçage correspondant de l'autre paroi plane et, lorsqu'est exercée la pression du soudage entre le manchon et l'autre paroi et est appliqué le courant de soudage, de prédéformer le bord du perçage pour l'amener en contact intime sur la troisième partie tronconique pour le déformer ensuite en contact intime avec la quatrième partie tronconique et souder le bord déformé sur la quatrième partie tronconique.

Avantageusement, les première et seconde parties tronconiques et/ou les troisième et quatrième parties tronconiques du manchon sont raccordées l'une à l'autre par un raccordement concave présentant un rayon de courbure permettant une déformation optimale du bord du perçage lors de son passage de la première et/ou la troisième partie à la deuxième et/ou la quatrième partie tronconique.

La paroi définissant la première et/ou la troisième partie tronconique du manchon a une épaisseur sensiblement égale à celle de chacune des parois planes et la zone de raccordement entre les première et deuxième parties tronconiques et/ou les troisième et quatrième parties tronconiques a une épaisseur approximativement égale à celle de chaque paroi plane.

La pente de la première et/ou troisième partie tronconique du manchon correspond à un angle compris entre environ 28° et 32° et la pente de la deuxième et/ou quatrième partie tronconique correspond à un angle compris entre environ 43 et 47°.

Les première et seconde parties tronconiques du manchon sont disposées symétriquement aux troisième et quatrième parties tronconiques par rapport au plan transversal médian du manchon.

Avantageusement, le manchon peut comprendre une collerette située dans le plan médian transversal de celui-ci et ayant une épaisseur sensiblement égale à la distance séparant les deux parois planes.

De préférence, le raccordement concave a un rayon de courbure compris entre environ 3,7 mm et environ 4,3 mm.

Le manchon est avantageusement utilisé pour relier de façon étanche deux parois planes parallèles de deux collecteurs respectivement de deux parties jumelées d'un radiateur de chauffage à circulation d'eau, le perçage central du manchon permettant la circulation d'eau entre les deux collecteurs.

Selon un mode de réalisation, le manchon est réalisé en acier.

L'épaisseur de chacune des parois planes est de l'ordre de 1 à 1,5 mm.

L'invention propose également un procédé pour relier de façon étanche deux parois planes espacées sensiblement parallèles de relativement faible épaisseur par au moins un manchon tel que défini précédemment et qui est caractérisé en ce qu'il consiste à disposer le manchon en appui par gravité par sa première partie tronconique dans le perçage correspondant de l'une, inférieure, des parois planes maintenue en position horizontale, placer l'autre paroi plane supérieure au-dessus de la paroi inférieure de façon à disposer la troisième portion tronconique du manchon en appui dans le perçage correspondant de la paroi supérieure ; exercer une pression sur au moins la paroi supérieure et appliquer un courant électrique de soudage de façon à déformer le bord de chaque perçage pour l'amener en contact intime successivement avec les deux portions tronconiques correspondantes du manchon et souder le bord déformé sur la portion tronconique de plus forte pente du manchon.

L'invention sera mieux comprise dans la description explicative qui va suivre faite en référence aux dessins schématiques annexés donnés uniquement à titre d'exemple relative à un mode de réalisation de l'invention et dans lesquels :
- La figure 1 est une vue en coupe transversale de deux parties jumelées d'un radiateur assemblées l'une à l'autre par au moins deux manchons conformément à l'art antérieur ;
- La figure 2 est une vue agrandie en coupe longitudinale d'un manchon de liaison ou de raccordement conforme à l'invention ;
- Les figures 3 à 5 représentent les différentes étapes de déformation des bords de perçages de parois planes à souder de façon étanche sur les pourtours correspondants du manchon de l'invention ;
- Les figures 6 et 7 représentent partiellement un manchon de raccordement connu dont les conicités sont respectivement différentes et conduisant à une déformation et arrachement des parois planes ; et
- La figure 8 représente une variante de réalisation du manchon de raccordement de l'invention.

L'invention va être décrite en application à l'accouplement de deux parties d'un radiateur de chauffage à circulation d'eau, mais il est bien entendu qu'elle peut s'appliquer d'une manière générale à des réservoirs devant être accouplés l'un à l'autre de façon étanche par leurs parois planes de grandes dimensions et de faibles épaisseurs de façon à permettre une circulation de fluide entre ces deux réservoirs.

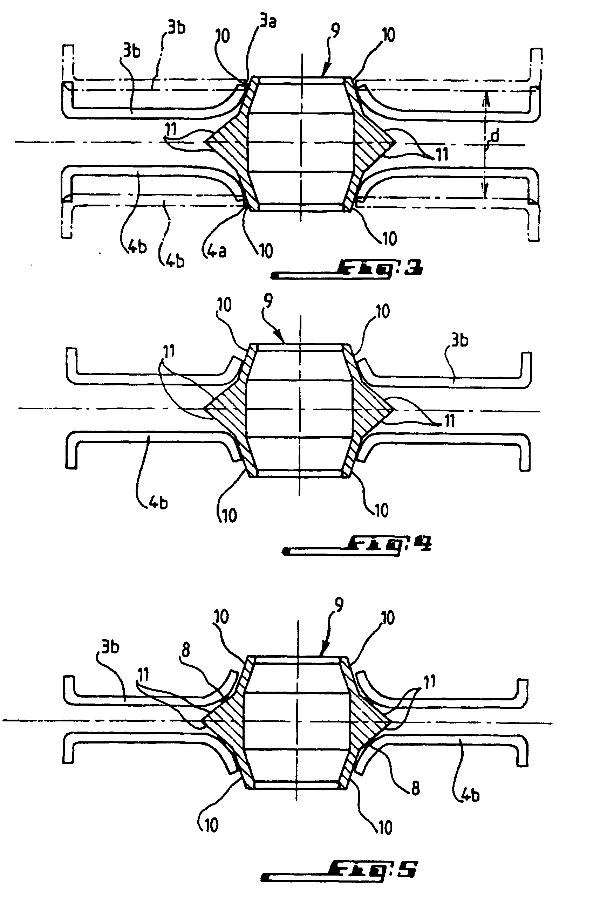

La figure 2 est une vue en coupe longitudinale d'un manchon de l'invention permettant d'accoupler l'une à l'autre les deux parois planes 3b, 4b des deux collecteurs 3 et 4 du radiateurs de la figure 1 de façon à assurer une circulation d'eau, de façon étanche, entre les deux collecteurs.

Le manchon 9 comprend, disposées de façon symétrique par rapport au plan transversal médian P de celui-ci, deux parties tronconiques 10 partant chacune d'une extrémité du manchon 9 et deux autres parties tronconiques 11 prolongeant chacune la partie tronconique 10 et ayant une pente supérieure à celle de la partie tronconique 10. Les deux parties tronconiques adjacentes 11 sont raccordées l'une à l'autre par une portion médiane cylindrique 12.

Suivant l'exemple de réalisation du manchon 9 représenté en figure 2, la pente des deux parties tronconiques 11 correspond à un angle A1 de 45° tandis que la pente des deux parties tronconiques 10 correspond à un angle A2 de 30°. De préférence, la pente des deux parties tronconiques 10 correspond à un angle A2 compris entre 28° et 32° et la pente des parties tronconiques 11 correspond à un angle compris entre environ 43° et 47°.

En outre, la paroi tronconique définissant chaque partie tronconique 10 a une épaisseur ep sensiblement égale à l'épaisseur de chaque paroi plane 3b, 4b des deux collecteurs 3, 4, c'est-à-dire de l'ordre de 1 à 1,5 mm.

Chaque partie tronconique 10 a sa surface externe raccordée à la surface externe de la partie tronconique suivante 11 par un raccordement concave 13 ayant un rayon de courbure R de préférence compris entre environ 3,7 mm et environ 4,3 mm.

A titre d'exemple, le diamètre D1 de l'alésage interne d'entrée de chaque côté du manchon 9 est de 13 mm avec un diamètre externe D2 de la portion cylindrique 12 de 27 mm. En outre, l'alésage d'entrée situé de chaque côté du manchon 9 ayant le diamètre D1 s'étend sur une longueur axiale ℓ1 sensiblement égale à l'épaisseur ep de la partie cylindrique correspondant 10 qui, dans le cas présent, est de 1,13 mm. Le diamètre D3 qui est celui de la partie de raccordement entre deux parties tronconiques 10, 11 est de 20,62 mm et la longueur L du manchon 9 est égale à 18 mm. Le diamètre D4 de l'alésage central du manchon 9 et qui raccorde l'une à l'autre les deux surfaces latérales internes tronconiques des deux parties 10, est de 17 mm. On notera enfin que l'épaisseur er de la parois située dans la zone de raccordement de la paroi de chaque partie 10 à la paroi définissant la partie tronconique 11 est approximativement égale à l'épaisseur ep.

Bien entendu, les valeurs des dimensions du manchon ci-dessus ne sont données qu'à titre indicatif. Par contre, les valeurs des angles A1 et A2 des parties tronconiques 10, 11 et du rayon de courbure du raccordement concave 13 doivent être respectées pour d'autres dimensions du manchon 9 et la valeur d'épaisseur ep de chaque partie tronconique 10 ainsi que la valeur d'épaisseur er de la zone de transition entre les deux parties tronconiques correspondantes 10, 11 ont également une grande importance comme on le verra ultérieurement.

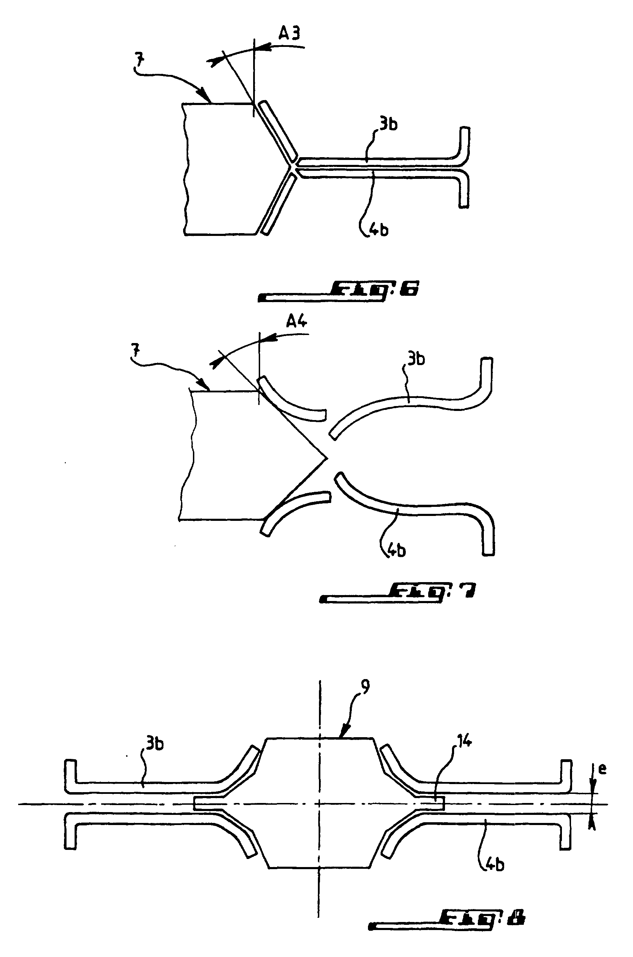

Le principe de soudage de façon étanche des deux parois planes de relativement faible épaisseur 3b et 4b des connecteurs 3, 4 au manchon 9 va être maintenant décrit en référence aux figures 3 à 5 où seules les deux parois 3b, 4b des collecteurs 3, 4 ont été représentées, pour la simplicité, comme de simples plaques respectivement supérieure 3b et inférieure 4b.

Tout d'abord, le manchon 9 est placé debout, par gravité, dans le perçage 4a de la paroi inférieure 4b maintenue horizontalement par un moyen de support approprié (non représenté), de façon que l'une des deux parties tronconiques 10 vienne en appui sur le bord périphérique du perçage 4a qui positionne ainsi le manchon 9 sans qu'il soit nécessaire de prévoir des tolérances particulières sur le diamètre du perçage 4a. Ensuite, la paroi plane supérieure 3b est disposée au-dessus de la paroi inférieure 4b de façon que le perçage correspondant 3a vienne en appui, par son bord périphérique, sur l'autre partie tronconique 10 du manchon 9, comme cela est représenté en traits mixtes en figure 3 qui montre également que les deux parois 3b, 4b sont séparées parallèlement l'une de l'autre d'une distance d, par exemple de 12 mm.

L'opération de soudage des parois 3b, 4b au manchon 9 s'effectue à l'aide d'une machine de soudage par résistance connue en soi et du type comprenant par exemple deux vérins pneumatiques respectivement supérieur et inférieur portant des électrodes de soudage entre lesquelles sont disposées les parois superposées 3b, 4b. Dans ce genre de machine, les phases d'un cycle de soudage par résistance avec des électrodes se décomposent en une première phase dite d'accostage par laquelle les électrodes sont rapprochées, à partir d'une position de retrait, des pièces à souder jusqu'au contact, une deuxième phase dite de mise en pression pour exercer l'effort de soudage, une troisième phase de passage du courant de soudage où les pièces à souder se ramollissent et s'écrasent quelque peu avec les électrodes suivant le mouvement tout en continuant à exercer l'effort de soudage, une quatrième phase dite de forgeage à laquelle le courant de soudage est arrêté avec maintien d'un effort et une cinquième phase par laquelle les électrodes de soudage sont écartées l'une de l'autre. Toutefois, il est avantageux pour l'invention d'appliquer la phase de forgeage avant la troisième phase de passage du courant de soudage.

L'application du cycle de soudage ci-dessus défini aux parois 3b, 4b va donc se dérouler comme suit.

Les vérins supérieur et inférieur portant les électrodes de soudage sont amenés en contact respectivement sur la paroi supérieure 3b et sous la paroi inférieure 4b pour exercer sur celles-ci la pression de soudage et le passage du courant de forgeage va permettre au manchon, du fait de la faible épaisseur ep de la paroi de chaque partie tronconique 10, de s'échauffer très rapidement et de transmettre la chaleur par effet joule à la périphérie de chacun des perçages 3a, 4a des parois 3b, 4b et donc permettre une déformation en cône optimale du bord de chaque perçage pour une soudure par résistance comme représenté en figure 3. Ainsi, l'angle A2 de chaque partie tronconique 10 permet non seulement de positionner le manchon 9 dans les perçages 3a, 4a des parois 3b, 4b, mais également de préparer, plus précisément de conformer par forgeage, le bord de chaque perçage pour l'amener en contact intime sur la périphérie de la partie tronconique correspondante 10. La partie de paroi de chaque perçage, étant chauffée et prédéformée par la portion tronconique 10 de la valeur d'angle A2, permet de l'amener en contact intime avec la partie tronconique 11 d'angle A1 pour l'épouser parfaitement et donc assurer ensuite un passage uniforme du courant de soudage impératif pour une soudure résistante et de bonne qualité, la valeur de l'angle A1 de chaque partie tronconique 11 permettant d'éviter le phénomène de poinçonnage de la partie de paroi en contact avec le manchon 9. C'est lors de la phase de glissement de la partie déformée de paroi de chaque perçage 3a, 4a de la pente de valeur d'angle A2 à la pente de valeur d'angle A1 que le rayon de courbure R du raccordement concave 13 intervient de façon importante pour en quelque sorte exercer un phénomène de roulage de la paroi déformée de la partie tronconique 10 à la partie tronconique 11 comme représenté en figure 4. En effet, un rayon de courbure trop faible du raccordement 13 pouvant aller jusqu'à une conformation de raccordement analogue à une brisure, entraînerait brutalement la matière chaude de la paroi déformée car un tel raccordement représenterait alors en quelque sorte un point d'arrêt dans l'enfoncement de la paroi déformée et la conséquence serait un cisaillement inévitable de la matière. Par contre, un rayon R de courbure trop important du raccordement 13 ne permettrait pas à la paroi déformée de passer de la partie tronconique 10 à la partie tronconique 11 dans un temps suffisamment court pour que la matière prédéformée soit encore dans les conditions optimales de malléabilité pour une soudure efficace.

Ainsi, l'angle A2 de chaque partie tronconique 10 a une valeur permettant de pénétrer la matière de la partie de paroi environnante de chaque perçage 3b, 4b avec une faible pression et d'assurer le passage du courant et donc de chauffer, déformer par forgeage et préparer une paroi en cône de soudure idéale pour la partie tronconique 11 de valeur d'angle A1. On a ainsi constaté que les valeurs de pression de soudage permises par le manchon 9 conforme à l'invention sont de quatre fois inférieures à celles nécessaires pour les manchons d'accouplement connus jusqu'à maintenant.

La figure 6 montre l'utilisation d'un manchon d'accouplement 7 du genre représenté en figure 1 pour accoupler les deux parois 3b, 4b et ayant de chaque côté une seule partie tronconique ayant une pente correspondant à une valeur d'angle A3 inférieure ou égale à 30°. Un tel manchon conduirait inévitablement à transpercer les parois 3b, 4b lors des opérations de soudage avec un écart entre les deux parois quasiment nul.

La figure 7 montre qu'avec un manchon de raccordement 7 ayant également de chaque côté une seule partie tronconique ayant une pente correspondant à un angle A4 supérieur ou égal à 45° serait lui aussi inefficace pour préparer une bonne surface de contact pour la soudure et conduirait à devoir augmenter la pression et l'intensité du courant de soudage et donc à brûler la matière de la paroi, la déformer et l'arracher comme représenté sur cette figure.

Au contraire, le manchon 9 de l'invention permet de souder efficacement de façon étanche les deux parois à celui-ci avec une distance ou écartement e (par exemple de l'ordre de 7mm) entre parois rigoureusement constant pour toutes les opérations de soudage de parois impliquant les mêmes manchons 9.

La figure 8 représente une variante de réalisation du manchon 9 de l'invention qui comprend une collerette 14 située dans le plan médian transversal du manchon et ayant une épaisseur sensiblement égale à la distance ou à l'écartement e devant séparer les deux parois 3b, 4b lorsque celles-ci sont soudées au manchon 9. Ainsi, la collerette 14 permet aux deux parois à souder 3b, 4b de venir en appui respectivement sur ses deux faces latérales opposées à la fin de l'opération de soudage et d'assurer ainsi la fonction d'une butée mécanique permettant d'obtenir un écartement fiable et constant e. Dans ce cas, il est impératif que le passage du courant soit interrompu juste avant la phase d'accostage des parois 3b, 4b sur les deux faces de la collerette 14 du manchon 9 et que la pression de soudage soit maintenue quelque temps pour permettre un refroidissement qui annulera l'effet de retour élastique d'une matière de paroi trop chaude.

Le manchon de l'invention permet donc de résoudre les problèmes d'assemblage de deux réservoirs clos, à parois minces, en utilisant la technique de soudage électrique par résistance tout en offrant des performances techniques et esthétiques impossibles à obtenir avec des pièces ou organes de liaison antérieurement connus. En outre, le manchon de l'invention peut être facilement réalisé et est très peu onéreux.

## Revendications

1. Manchon permettant de relier de façon étanche deux parois planes espacées en tôle sensiblement parallèles de relativement faible épaisseur (3b, 4b) en soudant, par soudage électrique par résistance, les bords de deux perçages (3a, 4a) des deux parois (3b, 4b) aux pourtours correspondants du manchon (9) qui s'étend transversalement aux deux parois, **caractérisé en ce qu'**il comprend, à partir d'au moins l'une des extrémités du manchon, deux parties tronconiques successives (10, 11), la première partie tronconique (10) partant de l'extrémité du manchon (9) ayant une pente inférieure à celle de la deuxième partie tronconique suivante (11) et permettant à la fois de positionner le manchon (9) dans le perçage correspondant (3a, 4a) de la paroi (3b, 4b) et, lorsqu'est exercée la pression de soudage entre le manchon (9) et la paroi (3b, 4b) et est appliqué le courant de soudage, de prédéformer le bord du perçage (3a, 4a) pour l'amener en contact intime sur la première partie tronconique (10) pour le déformer ensuite en contact intime avec la deuxième partie tronconique (11) et souder le bord déformé sur la deuxième partie tronconique (11).

2. Manchon selon la revendication 1, **caractérisé en ce qu'**il comprend également, à partir de l'autre extrémité opposée du manchon (9) deux parties tronconiques successives (10, 11), la troisième partie tronconique (10) partant de l'extrémité opposée du manchon (9) ayant une pente inférieure à celle de la quatrième partie tronconique suivante (11) et permettant à la fois de positionner le manchon (9) dans le perçage correspondant (3a, 4a) de l'autre paroi plane (3b, 4b) et, lorsqu'est exercée la pression de soudage entre le manchon (9) et l'autre paroi (3b, 4b) et est appliqué le courant de soudage, de prédéformer le bord du perçage (3a, 4a) pour l'amener en contact intime sur la troisième partie tronconique (10) pour le déformer ensuite en contact intime avec la quatrième partie tronconique (11) et souder le bord déformé sur cette quatrième partie tronconique (11).

3. Manchon selon la revendication 1 ou 2, **caractérisé en ce que** les première et seconde parties tronconiques (10, 11) et/ou les troisième et quatrième parties tronconiques (10, 11) sont raccordées l'une à l'autre par un raccordement concave (13) présentant un rayon de courbure (R) permettant une déformation optimale du bord du perçage (3a, 4a) lors de son passage de la première et/ou troisième partie tronconique (10) à la deuxième et/ou quatrième partie tronconique (11).

4. Manchon selon l'une des revendications précédentes, **caractérisé en ce que** la paroi définissant la première et/ou troisième partie tronconique (10) du manchon (9) a une épaisseur (ep) sensiblement égale à celle de chacune des parois planes (3b, 4b) et la zone de raccordement entre les première et deuxième parties tronconiques (10, 11) et/ou les troisième et quatrième parties tronconiques (10, 11) a une épaisseur approximativement égale à celle de chaque paroi plane (3b, 4b).

5. Manchon selon l'une des revendications précédentes, **caractérisé en ce que** la pente de la première et/ou troisième partie tronconique (10) correspond à un angle compris entre environ 28° et 32° et la pente de la deuxième et/ou quatrième partie tronconique (11) correspond à un angle compris entre environ 43° et 47°.

6. Manchon selon l'une des revendications 2 à 5, **caractérisé en ce que** les première et seconde parties tronconiques (10, 11) sont disposées symétriquement aux troisième et quatrième parties tronconiques (10, 11) par rapport au plan transversal médian du manchon (9).

7. Manchon selon la revendication 6, **caractérisé en ce qu'**il comprend une collerette (14) située dans le plan médian transversal du manchon (9) et ayant une épaisseur sensiblement égale à la distance (e) séparant les deux parois planes soudées (3b, 4b).

8. Manchon selon l'une des revendications 3 à 7, **caractérisé en ce que** le raccordement concave (13) a un rayon de courbure (R) compris entre environ 3,7 mm et environ 4,3 mm.

9. Manchon selon l'une des revendications précédentes, **caractérisé en ce qu'**il est en acier.

10. Manchon selon l'une des revendications précédentes, **caractérisé en ce que** l'épaisseur de chaque paroi plane (3b, 4b) est environ de 1 à 1,5 mm.

11. Utilisation d'un manchon selon l'une des revendications précédentes, pour relier de façon étanche deux parois planes parallèles (3b, 4b) de deux collecteurs (3, 4) respectivement de deux parties jumelées d'un radiateur de chauffage à circulation d'eau (1, 2), le perçage central du manchon (9) permettant la circulation d'eau entre les deux collecteurs (3, 4).

12. Procédé pour relier de façon étanche deux parois planes espacées sensiblement parallèles de relativement faible épaisseur (3b, 4b) par au moins un manchon (9) tel que défini dans la revendication 2, **caractérisé en ce qu'**il consiste à disposer le manchon (9) en appui par gravité par sa première partie tronconique (10) dans le perçage correspondant (4a) de l'une (4), inférieure, des parois planes maintenue en position horizontale ; placer l'autre paroi plane supérieure (3b) au-dessus de la paroi inférieure (4b) de façon à disposer la troisième portion tronconique (10) du manchon (9) en appui dans le perçage correspondant (3a) de la paroi supérieure (3b) ; exercer une pression sur au moins la paroi supérieure (3a) et appliquer un courant électrique de soudage de façon à déformer le bord de chaque perçage pour l'amener en contact intime successivement avec les deux portions tronconiques correspondantes (10, 11) du manchon (9) et souder le bord déformé sur la portion tronconique (11) de plus forte pente du manchon (9).

## Claims

1. Sleeve for making a leakproof connection between two planar parallel walls made of relatively thin sheet material (3b, 4b) by welding the edge of two holes (3a, 4a) of two walls (3b, 4b) to the relevant circumferences of the sleeve (9), which extends transversely to the two walls, by electric resistance welding, **characterised by** the fact that it comprises two successive tapered parts (10, 11) starting from at least one of the ends of the sleeve, the first tapered part (10) starting from the end of the sleeve (9) with a slope which is less than that of the following second tapered part (11), allowing the sleeve (9) to be positioned in the relevant hole (3a, 4a) of the wall (3b, 4b) at the same time and, when welding pressure is exerted between the sleeve (9) and the wall (3b, 4b) and the welding current is applied, the edge of the hole (3a, 4a) to be preshaped, in order to bring it into close contact with the first tapered part (10), in order to then shape it in close contact with the second tapered part (11) and weld the shaped edge to the second tapered part (11).

2. Sleeve according to claim 1, **characterised by** the fact that it also comprises two successive tapered parts (10, 11) starting from the other opposite end of the sleeve (9), the third tapered part (10) starting from the opposite end of the sleeve (9) with a slope, which is less than that of the following fourth tapered part (11), allowing the sleeve (9) to be positioned in the relevant hole (3a, 4a) of the other planar wall (3b, 4b) at the same time and, when welding pressure is exerted between the sleeve (9) and the other wall (3b, 4b) and the welding current is applied, the edge of the hole (3a, 4a) to be preshaped to bring it into close contact with the third tapered part (10) to shape it in close contact with the fourth tapered part (11) and weld the shaped edge to this fourth tapered part (11).

3. Sleeve according to claim 1 or 2, **characterised by** the fact that the first and second tapered parts (10, 11) and/or the third and fourth tapered parts (10, 11) are connected to each other by a concave connection (13) with a radius of curvature (R) allowing optimum shaping of the edge of the hole (3a, 4a) when passing from the first and/or third tapered part (10) to the second and/or fourth tapered part (11).

4. Sleeve according to one of the previous claims, **characterised by** the fact that the wall defining the first and/or third tapered part (10) of the sleeve (9) has a thickness (ep) more or less equal to that of each of the planar walls (3b, 4b) and the connection area between the first and second tapered parts (10, 11) and/or the third and fourth tapered parts (10, 11) has a thickness approximately equal to that of each planar wall (3b, 4b).

5. Sleeve according to one of the previous claims, **characterised by** the fact that the slope of the first and/or third tapered part (10) corresponds to an angle between about 28° and 32° and the slope of the second and/or fourth tapered part (11) corresponds to an angle between about 43° and 47°.

6. Sleeve according to one of claims 2 to 5, **characterised by** the fact that the first and second tapered parts (10, 11) are arranged symmetrically to the third and fourth tapered parts (10, 11) in relation to the transverse median plane of the sleeve (9).

7. Sleeve according to claim 6, **characterised by** the fact that it comprises a flange (14) situated in the transverse median plane of the sleeve (9) with a thickness more or less equal to the distance (e) separating the two welded planar walls (3b, 4b).

8. Sleeve according to one of claims 3 to 7, **characterised by** the fact that the concave connection (13) has a radius of curvature (R) between about 3.7 mm and 4.3 mm.

9. Sleeve according to one of the previous claims, **characterised by** the fact that it is in steel.

10. Sleeve according to one of the previous claims, **characterised by** the fact that the thickness of each planar wall (3b, 4b) is about 1 to 1.5 mm.

11. Use of a sleeve according to one of the previous claims to make a leakproof connection between two parallel planar walls (3b, 4b) of two collectors (3, 4) of two twin parts of a radiator with heating by circulation of water (1, 2) respectively, the central hole of the sleeve (9) allowing the water to circulate between the two collectors (3, 4).

12. Process for making a leakproof connection between two relatively thin more or less parallel planar walls (3b, 4b) by at least one sleeve (9) such as defined in claim 2, **characterised by** the fact that it consists of making the sleeve (9) supported by gravity by its first tapered part (10) in the relevant hole (4a) of the bottom one (4) of the planar walls, held in a horizontal position; placing the other top planar wall (3b) above the bottom wall (4b) so as to make the third tapered portion (10) of the sleeve (9) supported in the relevant hole (3a) of the top wall (3b); exercising pressure on at least the top wall (3a) and applying an electric welding current so as to shape the edge of each hole, in order to successively put it in close contact with the two relevant tapered portions (10, 11) of the sleeve (9) and welding the shaped edge to the tapered portion (11) with the largest slope of the sleeve (9).

## Patentansprüche

1. Hülse zum dichten Verbinden von zwei voneinander beabstandeten flachen Wänden aus Blech, die im wesentlichen parallel verlaufen und eine relativ geringe Dicke (3b, 4b) haben, indem die Ränder zweier Bohrungen (3a, 4a) der beiden Wände (3b, 4b) mit den entsprechenden Umfangsbereichen der sich quer zu den beiden Wänden verlaufenden Hülse (9) durch elektrisches Widerstandsschweißen verschweißt werden, **dadurch gekennzeichnet, dass** sie ausgehend von zumindest einem der Hülsenenden zwei aufeinanderfolgende kegelstumpfförmige Teile (10, 11) enthält, wobei das von dem Ende der Hülse (9) ausgehende erste kegelstumpfförmige Teil (10) eine geringere Neigung als das zweite kegelstumpfförmige, nachfolgende Teil (11) aufweist und es ermöglicht, zugleich die Hülse (9) in die entsprechende Bohrung (3a, 4a) der Wand (3b, 4b) einzusetzen und bei einem zwischen Hülse (9) und Wand (3b, 4b) ausgeübten Schweißdruck und bei angelegtem Schweißstrom den Rand der Bohrung (3a, 4a) vorab umzuformen, um ihn in engen Kontakt mit dem ersten kegelstumpfförmigen Teil (10) zu bringen, um ihn anschließend in engem Kontakt mit dem zweiten kegelstumpfförmigen Teil (11) umzuformen und den umgeformten Rand mit dem zweiten kegelstumpfförmigen Teil (11) zu verschweißen.

2. Hülse nach Anspruch 1, **dadurch gekennzeichnet, dass** sie auch ausgehend vom anderen entgegengesetzten Ende der Hülse (9) zwei aufeinanderfolgende kegelstumpfförmige Teile (10, 11) enthält, wobei das von dem entgegengesetzten Ende der Hülse (9) ausgehende dritte kegelstumpfförmige Teil (10) eine geringere Neigung als das nachfolgende vierte kegelstumpfförmige Teil (11) aufweist und es ermöglicht, zugleich die Hülse (9) in die entsprechende Bohrung (3a, 4a) der anderen flachen Wand (3b, 4b) einzusetzen und bei einem zwischen der Hülse (9) und der anderen Wand (3b, 4b) ausgeübten Schweißdruck und bei angelegtem Schweißstrom den Rand der Bohrung (3a, 4a) vorab umzuformen, um ihn in engen Kontakt mit dem dritten kegelstumpfförmigen Teil (10) zu bringen, um ihn anschließend in engem Kontakt mit dem vierten kegelstumpfförmigen Teil (11) umzuformen und den umgeformten Rand mit diesem vierten kegelstumpfförmigen Teil (11) zu verschweißen.

3. Hülse nach Anspruch 1 oder 2, **dadurch gekennzeichnet, dass** das erste und das zweite kegelstumpfförmige Teil (10, 11) und/oder das dritte und das vierte kegelstumpfförmige Teil (10, 11) über eine konkave Verbindung (13) verbunden sind, die einen Krümmungsradius (R) aufweist, der eine optimale Umformung des Randes der Bohrung (3a, 4a) bei ihrem Übergang vom ersten und/oder dritten kegelstumpfförmigen Teil (10) zum zweiten und/oder vierten kegelstumpfförmigen Teil (11) ermöglicht.

4. Hülse nach einem der vorangehenden Ansprüche, **dadurch gekennzeichnet, dass** die das erste und/oder dritte kegelstumpfförmige Teil (10) der Hülse (9) definierende Wand eine Dicke (ep) aufweist, die im wesentlichen gleich der Dicke einer jeden flachen Wand (3b, 4b) ist, und der Verbindungsbereich zwischen dem ersten und dem zweiten kegelstumpfförmigen Teil (10, 11) und/oder dem dritten und dem vierten kegelstumpfförmigen Teil (10, 11) eine Dicke aufweist, die annähernd gleich der einer jeden flachen Wand (3b, 4b) ist.

5. Hülse nach einem der vorangehenden Ansprüche, **dadurch gekennzeichnet, dass** die Neigung des ersten und/oder des dritten kegelstumpfförmigen Teils (10) einem Winkel zwischen etwa 28° und 32° entspricht und die Neigung des zweiten und/oder des vierten kegelstumpfförmigen Teils (11) einem Winkel zwischen etwa 43° und 47° entspricht.

6. Hülse nach einem der Ansprüche 2 bis 5, **dadurch gekennzeichnet, dass** das erste und das zweite kegelstumpfförmige Teil (10, 11) bezüglich der Mittelquerebene der Hülse (9) symmetrisch zu dem dritten und dem vierten kegelstumpfförmigen Teil (10, 11) angeordnet sind.

7. Hülse nach Anspruch 6, **dadurch gekennzeichnet, dass** sie einen Kragen (14) enthält, der in der Mittelquerebene der Hülse (9) liegt und dessen Dicke im wesentlichen dem Abstand (e) entspricht, der die beiden verschweißten flachen Wände (3b, 4b) voneinander trennt.

8. Hülse nach einem der Ansprüche 3 bis 7, **dadurch gekennzeichnet, dass** die konkave Verbindung (13) einen Krümmungsradius (R) aufweist, der zwischen etwa 3,7 mm und etwa 4,3 mm liegt.

9. Hülse nach einem der vorangehenden Ansprüche, **dadurch gekennzeichnet, dass** sie aus Stahl besteht.

10. Hülse nach einem der vorangehenden Ansprüche, **dadurch gekennzeichnet, dass** die Dicke einer jeden flachen Wand (3b, 4b) etwa 1 bis 1,5 mm beträgt.

11. Verwendung einer Hülse nach einem der vorangehenden Ansprüche, zum dichten Verbinden von zwei parallel verlaufenden flachen Wänden (3b, 4b) zweier Kollektoren (3, 4) von zwei jeweiligen identischen Teilen eines Wasserkreislaufheizkörpers (1, 2), wobei die Mittelbohrung der Hülse (9) den Wasserkreislauf zwischen den beiden Kollektoren (3 4) ermöglicht.

12. Verfahren zum dichten Verbinden von zwei voneinander beabstandeten flachen Wänden, die im wesentlichen parallel verlaufen und eine relativ geringe Dicke (3b, 4b) haben, mittels zumindest eine Hülse (9) wie sie in Anspruch 2 definiert ist, **dadurch gekennzeichnet, dass** es darin besteht, die Hülse (9) mit ihrem ersten kegelstumpfförmigen Teil (10) mittels Schwerkraft in Anlage an die entsprechende Bohrung (4a) von der einen unteren Wand (4) der flachen Wände zu bringen, die in horizontaler Stellung gehalten wird, die andere obere flache Wand (3b) oberhalb der unteren Wand (4b) so anzuordnen, dass der dritte kegelstumpfförmige Teil (10) der Hülse (9) in Anlage in die entsprechende Bohrung (3a) der oberen Wand (3b) gebracht wird, einen Druck zumindest auf die obere Wand (3a) auszuüben und einen elektrischen Schweißstrom so anzulegen, dass der Rand einer jeden Bohrung umgeformt wird, um ihn nacheinander in engen Kontakt mit den beiden entsprechenden kegelstumpfförmigen Teilen (10, 11) der Hülse (9) zu bringen und den umgeformten Rand mit dem stärker geneigten kegelstumpfförmigen Teil (11) der Hülse (9) zu verschweißen.
